# EUROPÄISCHE PATENTSCHRIFT

(11) **EP 1 143 131 B1**
(45) Veröffentlichungstag und Bekanntmachung des Hinweises auf die Patenterteilung: **14.02.2007**
(21) Anmeldenummer: 01250117.7
(22) Anmeldetag: 03.04.2001
(51) Int. Cl.: F02D 41/02, F02D 41/14

(54) **Mehrflutige Abgasanlage und Verfahren zur Regelung eines Luft-Kraftstoff-Verhältnisses eines Mehrzylinderverbrennungsmotors**
Multiple exhaust gas system and method to regulate an air/fuel ratio of a multi-cylinder internal combustion engine
Système d'échappement multiple et procédé pour la régulation du rapport air/carburant d'un moteur à combustion interne à multiples cylindres

(30) Priorität: 07.04.2000 DE 10017386; 15.06.2000 DE 10029633
(43) Veröffentlichungstag der Anmeldung: 10.10.2001
(73) Patentinhaber: Volkswagen Aktiengesellschaft, 38436 Wolfsburg (DE)
(72) Erfinder: Pott, Ekkehard Dr., 38518 Gifthorn (DE); Krebs, Rudolf Dr., 86697 Oberhausen (DE); Donnerstag, Achim, 38104 Braunschweig (DE); Lang, Axel, 38304 Wolfenbüttel (DE)
(74) Vertreter: Schneider, Henry

(56) Entgegenhaltungen:
- EP-A- 0 727 568
- EP-A- 0 802 315
- EP-A- 1 004 756
- EP-A- 1 118 759
- WO-A-94/20743
- WO-A-98/45582
- DE-A- 4 024 801
- DE-A- 19 626 837
- DE-A- 19 801 815
- US-A- 5 341 788
- US-A- 5 467 594
- US-A- 5 657 625
- PATENT ABSTRACTS OF JAPAN vol. 013, no. 327 (M-854), 24. Juli 1989 (1989-07-24) & JP 01 110852 A (TOYOTA MOTOR CORP), 27. April 1989 (1989-04-27)

## Beschreibung

Die Erfindung betrifft eine mehrflutige Abgasanlage für Mehrzylinderverbrennungsmotoren für Kraftfahrzeuge und ein Verfahren zur Regelung eines Luft-Kraftstoff-Verhältnisses.

Es ist bekannt, mehrzylindrige Verbrennungsmotoren von Kraftfahrzeugen mit Abgasanlagen, die mindestens zwei Abgasstränge umfassen, in die jeweils ein oder mehrere Zylinder münden, auszustatten. Gattungsgemäße Mehrzylinderverbrennungsmotoren sind mit einer oder mehreren Zylinderbänken bekannt. Dabei umfasst jede Zylinderbank eine Anzahl von beispielsweise 2, 4 oder 6 in Reihen angeordneten Zylindern. Da der zeitliche Zündabstand der einzelnen Zylinder verschiedener Zylinderbänke relativ gering gewählt werden kann, weisen derartige Motoren ein gleichmäßigeres Drehmoment pro Umdrehung auf. Die Zuordnung jeweils eines separaten Abgasstranges zu einer Zylinderbank vermindert die gegenseitige Störung der einzelnen Zylinder einer Zylinderbank, da damit jeweils ein genügend großer Zündabstand zwischen den an einem Abgasstrang angeschlossenen Zylindern erreicht wird. Üblicherweise sind in jedem Abgasstrang solch mehrflutiger Abgasanlagen ein oder mehrere Katalysatoren angeordnet, um eine Abgasnachbehandlung zu ermöglichen. Mehrflutige Abgasanlagen können gegenüber einflutigen Anlagen höhere Drehmomente erzielen. Darüber hinaus ist aus Bauraumgründen die Unterbringung mehrerer kleinvolumiger Katalysatoren häufig einfacher zu realisieren, als die Anordnung eines einzigen großvolumigen Katalysators. Dies gilt insbesondere für grundsätzlich viel Bauraum beanspruchende Speicherkatalysatoren. Schließlich besteht bei einer mehrflutigen Abgasanlage die Möglichkeit, eine strang- oder auch zylinderselektive Motorsteuerung, insbesondere Lambdaregelung, durchzuführen. Dieses kommt in erster Linie einem Abgasmanagement zugute, durch das sich beispielsweise einzelne Katalysatoren gezielt aufheizen oder regenerieren lassen, wodurch insgesamt eine höhere Schadstoffkonvertierung und ein geringerer Kraftstoffverbrauch erzielt werden kann.

Demgegenüber besteht ein Nachteil mehrflutiger Abgasanlagen in den hohen Kosten, die zum Teil durch eine aufwendige Sensorik verursacht werden. So erfordern immer strenger werdende Schadstoffrichtlinien eine äußerst präzise Lambdaregelung und eine ständige Überwachung der Katalysatoren. Infolgedessen muss in jedem einzelnen Abgasstrang ein umfangreicher Sensorsatz, der beispielsweise aus Lambdasonden, NOₓ-Sensoren und Temperatursensoren besteht, angeordnet werden. Hinzu kommt ein erhöhter Verkabelungs- und Steuergeräteaufwand zur Auswertung der Signale der Sensoren.

JP 01 110852 A sowie die nachveröffentlichte EP 1 118 759 A offenbaren jeweils eine Abgasanlage mit zwei Abgassträngen und jeweils einem in diesen angeordneten Katalysator, wobei ein vollbestückter Abgasstrang eine stromauf des Katalysators angeordnete Lambdasonde aufweist und ein teilbestückter Strang diese nicht aufweist. Die Regelung des Luft-Kraftstoffgemischs der Zylinder des vollbestückten Strangs erfolgt gemäß EP 1 118 759 A über eine Regeleinrichtung mit alternierenden Mager- und Fettphasen. Die Umschaltung zwischen den mageren und fetten Lambdawerten und damit die eigentliche Regelung des im Zeitmittel einzuhaltenden Soll-Lambdas erfolgt in Abhängigkeit von den Signalen der Sensoren stromauf und stromab des Katalysators. Als Soll-Vorgabe des Luft-Kraftstoffgemischs der Zylinder des teilbestückten Strangs wird die gleiche Lambdakontur wie für den vollbestückten Strang verwendet, die aber entsprechend einem Signal des Sensors stromab des Katalysators um einen Offsetwert in Richtung mager oder fett verschoben ist. Gemäß JP 01 110852 A erfolgt die Lambdaregelung des vollbestückten Abgasstrangs zunächst anhand des Signals der Lambda-Sonde stromauf des Katalysators und wird anhand des Signals der nachgeschalteten Lambda-Sonde feingeregelt. Die "Vorsteuerung" des teilbestückten Strangs erfolgt anhand des bereits durch die nachgeschaltete Lambda-Sonde korrigierten Korrekturfaktors und wird anschließend durch das Signal der nachgeschalteten Lambda-Sonde im teilbestückten Strang feingeregelt.

Bedeutende Kraftstoffeinsparungen sind bei magerlauffähigen Verbrennungsmotoren, insbesondere durch die Anwendung von Direkteinspritzsystemen, die im so genannten Schichtladebetrieb eingesetzt werden, möglich. Im Leerlauf- und Teillastbetriebbereich werden bei sicherer Verbrennung äußerst magerer Luft-Kraftstoff-Gemische Kraftstoffeinsparungen von 40 % und 15 % über den gesamten Eurotestzyklus erreicht. Der Kraftstoff wird über elektromagnetische Düsenventile direkt in den Brennraum eingespritzt. Dabei wird im Schichtladebetrieb der Motor mit nahezu vollständig geöffneter Drosselklappe betrieben, womit zusätzlich Ladungswechselverluste vermieden werden. Ein konventioneller Homogenbetrieb des Motors, bei dem die Drosselklappenstellung die Menge des angesaugten Luft-Kraftstoff-Gemischs bestimmt, ist erst ab höheren Lasten erforderlich. Der Kraftstoffeinsparung bei magerlauffähigen Systemen steht jedoch ein insgesamt erhöhter Anteil von Stickoxiden (NOₓ) des Abgases gegenüber, der gegenwärtig nur von NOₓ-Speicherkatalysatoren effizient abgebaut werden kann, da reine 3-Wege-Katalysatoren nur dann, wenn Luft und Kraftstoff im genau definierten stöchiometrischen Verhältnis (λ = 1) dem Motor zugeführt werden, eine wirksame Umsetzung der Abgase zu unschädlichen Gaskomponenten bewirken können. NOₓ-Speicherkatalysatoren weisen neben einer 3-Wege-katalytischen Komponente zur Konvertierung unverbrannter Kohlenwasserstoffe (HC), Kohlenmonoxid (CO) und NOₓ eine NOₓ-Speicherkomponente auf, wodurch sie unter bestimmten Randbedingungen bei mageren Luft-Kraftstoff-Verhältnissen mit einem Lambdawert > 1 Stickoxide für einen begrenzten Zeitraum absorptiv als Nitrat speichern. Sobald die NOₓ-Speicherkapazität eines Katalysators erschöpft ist, müssen die Nitrate ausgespeichert werden. Hierzu wird der Motor in kurzen, zwischengeschalteten NOₓ-Regenerationsintervallen mit einem fetten oder stöchiometrischen Gemisch mit Lambda ≤ 1 betrieben. Durch dann im fetten Abgas im Überschuss enthaltenes und als Reduktionsmittel wirkendes HC und CO werden die Nitrate katalytisch freigesetzt und zu unschädlichen Gasen reduziert. Die Regeneration muss beendet werden, wenn keine Umsetzung von Reduktionsmittel mehr stattfindet, da es andernfalls zu einem Reduktionsmitteldurchbruch kommt. Dementsprechend werden NOₓ-Speicherkatalysatoren üblicherweise diskontinuierlich in einem längeren mageren Absorptionsmodus und einem kürzeren Regenerationsmodus betrieben. Während des Absorptionsmodus wird der Motor überwiegend im Schichtladebetrieb gefahren, im Regenerationsmodus dagegen im Homogenbetrieb. Üblicherweise sind die NOₓ-Speicherkatalysatoren motornahen konventionellen Vorkatalysatoren, insbesondere 3-Wege-Katalysatoren, nachgeschaltet. Deren Aufgabe besteht bei solchen modernen Verbrennungsmotoren hauptsächlich in der Absenkung von Kaltstart-Emissionswerten.

Die Überwachung und Steuerung des Speicherzyklus erfolgt mittels einer so genannten Lambdaregelung innerhalb des Motormanagements. Beim Einsatz von mehr als einem NOₓ-Speicherkatalysator in gattungsgemäßen mehrflutigen Abgasanlagen ist zwischen den verschiedenen Katalysatoren eine unterschiedliche Speicheraktivität und insbesondere unterschiedlich starke Speicherung von NOₓ zu finden. Ein bedarfsgerechtes Beenden der NOₓ-Regenerationsmaßnahmen hat daher möglichst individuell für jeden der NOₓ-Speicherkatalysatoren zu verschiedenen Zeiten zu erfolgen. Hierfür ist bereits bekannt, eine Anordnung von je einer Lambdasonde stromab jedes NOₓ-Speicherkatalysators zu verwenden. Damit ist jedoch keine direkte Erfassung und Auswertung der NOₓ-Speicherkatalysatoraktivität in einem mageren Luft-Kraftstoff-Gemisch möglich, da der mit einer Lambdasonde gemessene Lambdawert lediglich den Sauerstoffanteil im Abgas darstellt.

Um eine genauere Erfassung und Auswertung der NOₓ-Speicherkatalysatoraktivität zu erreichen, ist bereits vorgeschlagen worden, je einen NOₓ-Sensor stromab jedes NOₓ-Speicherkatalysators anzuordnen. Die heutigen NOₓ-Sensoren weisen ein Doppelkammersystem auf, dem das zu messende Gasgemisch zugeführt wird. In der ersten Kammer werden durch eine angelegte Spannung Sauerstoffmoleküle in Ionen zerlegt, die einen Festelektrolyten, vorzugsweise Zirkoniumdioxid, durchdringen. Dies ist erforderlich, da die Sauerstoffmoleküle die NOₓ-Messung andernfalls stören würden. Auf der anderen Seite kann somit ein dem Sauerstoffanteil des Abgases proportionales Signal (Lambdasignal) bereitgestellt werden. In einer zweiten Kammer erfolgt eine elektrische Zersetzung des verbleibenden Stickoxids in Stickstoff und Sauerstoff. Die Konzentration des Stickoxids ist dabei proportional einem Zersetzungsstrom. Demgegenüber ist eine herkömmliche Lambdasonde, die lediglich die Differenz im Sauerstoffgehalt zwischen Außenluft und Abgas misst, einfacher aufgebaut. Als Folge ihres relativ komplizierten Aufbaus sind NOₓ-Sensoren grundsätzlich teurer als Lambdasonden, so dass eine Vollbestückung mehrerer Abgasstränge mit je einem NOₓ-Sensor mit erheblichen Kosten verbunden ist.

Der Erfindung liegt die Aufgabe zugrunde, mehrflutige Abgasanlagen für Mehrzylinderverbrennungsmotoren zur Verfügung zu stellen, die gegenüber einer nahe liegenden Verdopplung oder Vervielfältigung von einflutigen Abgasanlagen und deren Sensor- und Regelungsausstattung mit einer verminderten Sensorzahl auskommen und somit mit vergleichsweise geringen Kosten verbunden sind. Die mehrflutige Abgasanlage soll trotzdem eine sehr genaue und schnelle Lambdaregelung auch in einem nur teilweise mit Lambda-Sonden bestückten Abgasstrang ermöglichen. Ferner soll ein Verfahren zur Regelung eines Luft-Kraftstoff-Verhältnisses eines mit einer entsprechenden mehrflutigen Abgasanlage ausgestatteten Verbrennungsmotors vorgeschlagen werden.

Diese Aufgabe wird mit einer mehrflutigen Abgasanlage mit den Merkmalen des unabhängigen Anspruchs 1 und mit einem Verfahren nach Anspruch 15 gelöst.

Die erfindungsgemäße mehrflutige Abgasanlage eines Mehrzylinderverbrennungsmotors für Kraftfahrzeuge, die insbesondere eine Regelung eines Luft-Kraftstoff-Verhältnisses (Lambdaregelung) für alle Abgasstränge gewährleistet, umfasst
(a) mindestens zwei Abgasstränge, in die jeweils mindestens ein Zylinder mündet,
(b) mindestens einen ersten, in jedem Abgasstrang angeordneten Katalysator,
(c) mindestens einen ersten, stromauf des Katalysators angeordneten Gassensor, wobei eine Anzahl der mit dem ersten Gassensor bestückten Abgasstränge kleiner als eine Gesamtzahl der Abgasstränge ist, so dass die Abgasanlage mindestens einen vollbestückten Abgasstrang umfasst, der den ersten Gassensor aufweist, und mindestens einen teilbestückten, den ersten Gassensor nicht aufweisenden Abgasstrang, und
(d) mindestens eine Regeleinrichtung zur Verarbeitung des durch den mindestens einen ersten Gassensor bereitgestellten Signals und Regelung eines in die Zylinder einzuspeisenden Luft-Kraftstoff-Verhältnisses mit den Schritten:
   - Erfassung eines von einer Konzentration mindestens einer Abgaskomponente abhängigen Signals des mindestens einen ersten, in dem mindestens einen vollbestückten Abgasstrang angeordneten Gassensors,
   - Regelung eines Luft-Kraftstoff-Verhältnisses des mindestens einen, dem mindestens einen vollbestückten Abgasstrang zugeordneten Zylinders in Abhängigkeit des Signals des ersten Gassensors,
   - Speicherung eines Kennfeldes, welches Stellgrößen der Luft-Kraftstoff-Regelung des mindestens einen, dem vollbestückten Abgasstrang zugeordneten Zylinders einem gemessenen Ist-Signalwert des ersten Gassensors zuordnet, und
   - Vorsteuerung eines Luft-Kraftstoff-Verhältnisses des mindestens einen, dem teilbestückten Abgasstrang zugeordneten Zylinders mittels des Kennfeldes.

Das erfindungsgemäße Verfahren zur Regelung eines Luft-Kraftstoff-Verhältnisses einer solchen Anlage sieht die Schritte vor:
- Erfassung eines von einer Konzentration mindestens einer Abgaskomponente abhängigen Signals des mindestens einen ersten, in dem mindestens einen vollbestückten Abgasstrang angeordneten Gassensors,
- Regelung eines Luft-Kraftstoff-Verhältnisses des mindestens einen, dem mindestens einen vollbestückten Abgasstrang zugeordneten Zylinders in Abhängigkeit des Signals des ersten Gassensors,
- Speicherung eines Kennfeldes, welches Stellgrößen der Luft-Kraftstoff-Regelung des mindestens einen, dem vollbestückten Abgasstrang zugeordneten Zylinders einem gemessenen Ist-Signalwert des ersten Gassensors zuordnet, und
- Vorsteuerung eines Luft-Kraftstoff-Verhältnisses des mindestens einen, dem teilbestückten Abgasstrang zugeordneten Zylinders mittels des Kennfeldes.

Erfindungsgemäß ist demnach nicht in jedem Abgasstrang ein erster Gassensor angeordnet, wodurch gegenüber nahe liegenden Konstruktionen mindestens ein Gassensor mitsamt einer für die Verarbeitung der von ihm bereitgestellten Signale erforderlichen Verkabelungs- und Regeleinrichtung eingespart wird. Vorzugsweise wird unabhängig von der Anzahl der Abgasstränge in der gesamten Anlage nur ein einziger erster Gassensor installiert, so dass bei mehr als zweiflutigen Anlagen sogar weitere Einsparungen möglich sind.

Es ist bevorzugt vorgesehen, dass der mindestens eine erste Gassensor eine Breitband-Lambdasonde ist, die in einem großen Bereich des Luft-Kraftstoff-Verhältnisses einen Sauerstoffanteil des Abgases messen kann und somit auch magere und fette Abgaszusammensetzungen ermitteln kann.

Gemäß einer äußerst vorteilhaften Ausgestaltung der Erfindung ist stromab des ersten Gassensors, insbesondere stromab eines ersten Katalysators oder eines weiteren Katalysators, in jedem Abgasstrang ein zweiter Gassensor, vorzugsweise eine Sprungantwort-Lambdasonde, und/oder ein Temperatursensor angeordnet. Sprungantwort-Lambdasonden haben gegenüber Breitband-Lambdasonden den Vorteil deutlich niedrigerer Kosten und einer größeren Kennlinienstabilität über ihre Lebensdauer. Letzteres Merkmal ermöglicht zudem eine Kalibrierung der Kennlinie der vorgeschalteten Breitband-Lambdasonde mittels der nachgeschalteten Sprungantwort-Lambdasonde.

Im Falle der Anordnung des zweiten Gassensors sieht eine besonders vorteilhafte Ausgestaltung der Erfindung vor, dass eine Feinregelung des Luft-Kraftstoff-Verhältnisses sowohl in den voll- als auch in den teilbestückten Abgassträngen beziehungsweise der diesen Abgassträngen zugeordneten Zylinder in Abhängigkeit des von dem zweiten Gassensor erfassten Signals durchgeführt wird. Auch in dieser Ausführung ist die Verwendung einer Sprungantwort-Lambdasonde als zweiter Gassensor sehr vorteilhaft, da diese - zumindest in dem relevanten Regelungsbereich um λ = 1 - eine sehr hohe Auflösung aufweist, welche die Breitband-Lambdasonde nicht erreicht. Die Kombination aus Breitband- und Sprungantwort-Lambdasonde ermöglicht eine Genauigkeit der Lambdaregelung im Promillebereich.

Die Feinregelung des Luft-Kraftstoff-Verhältnisses des teilbestückten Abgasstranges ist im Gegensatz zu dem vollbestückten Abgasstrang verhältnismäßig langsam. Dies liegt zum einen an der vergleichsweise großen Distanz, die ein von einem Zylinder kommendes Abgas bis zum Erreichen des zweiten Gassensors zurücklegen muss. Ferner bestehen auch bei gleichen Stellgrößen der Regeleinrichtung, insbesondere bei 4-Zylinder-Reihenmotoren, üblicherweise Abweichungen der tatsächlichen Luft-Kraftstoff-Verhältnisse der einzelnen Zylinder untereinander. Dieser Nachteil wird durch eine weitere vorteilhafte Ausgestaltung der Erfindung überwunden. Diese sieht vor, zu einem Zeitpunkt, an dem die in einem teilbestückten und einem vollbestückten Abgasstrang angeordneten zweiten Gassensoren im Wesentlichen gleiche Ist-Signalwerte bereitstellen, eine Differenz der Stellgrößen zwischen den Abgassträngen in dem Kennfeld zu speichern und bei der Vorsteuerung der Zylinder des teilbestückten Abgasstranges zu berücksichtigen. Auf diese Weise kann die Feinregelung des teilbestückten Abgasstranges mit annähernd der gleichen Geschwindigkeit wie die des vollbestückten Abgasstranges erfolgen. Eine weitere Präzisierung des Verfahrens kann außerdem durch Abspeicherung einer Betriebspunktabhängigkeit der Stellparameter und/oder des Differenzwertes der Stellparameter in dem Kennfeld erfolgen. Insbesondere kann ein Differenzwert einer momentanen Drehzahl oder Last des Kraftfahrzeuges zugeordnet werden. Denkbar ist femer die Berücksichtigung von Temperatur- und Dynamikeinflüssen sowie eines Katalysatorzustandes in dem Kennfeld.

Gemäß einer anderen Ausführungsform der Erfindung wird das Signal des stromab eines Katalysators angeordneten zweiten Gassensors verwendet, um einen Katalysatorzustand des betreffenden Katalysators zu überwachen. Dabei wird eine Zeitverzögerung zwischen einer Änderung des der betreffenden Zylinder zugeführten Luft-Kraftstoff-Verhältnisses und einer Antwort des zweiten Gassensors registriert und verfolgt. In dieser Ausführung wird der Umstand genutzt, dass eine Sauerstoffspeicheraktivität des Katalysators mit seiner Konvertierungsaktivität korreliert. Eine abweichende Ausführungsform sieht vor, die Zustandsüberwachung des Katalysators anhand einer stromab des Katalysators, mittels eines Temperatursensors gemessenen Abgastemperatur durchzuführen. Hierbei wird der Zusammenhang zwischen Konvertierungsaktivität und einer Abgastemperaturerhöhung genutzt. Die hierfür erforderliche Kenntnis der Abgastemperatur stromauf des Katalysators kann entweder durch entsprechend angeordnete Temperatursensoren oder durch Berechnung erfolgen.

Im Ergebnis ermöglicht somit die erfindungsgemäße Abgasanlage bei reduzierter Sensorbestückung eine präzise und schnelle Lambdaregelung in allen Abgassträngen sowie - in weiteren Ausgestaltungen - eine Ermittlung und Überwachung eines Katalysatorzustandes der hierin angeordneten Katalysatoren.

Weitere vorteilhafte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine zweiflutige Abgasanlage eines 4-Zylinder-Verbrennungsmotors mit einem gemeinsamen NOₓ-Speicherkatalysator gemäß dem Stand der Technik;
- Figur 2: eine bevorzugte Ausführungsform einer erfindungsgemäßen zweiflutigen Abgasanlage mit einem gemeinsamen NOₓ-Speicherkatalysator;
- Figur 3: zeitliche Signalverläufe von Gassensoren gemäß der in Figur 2 gezeigten Ausführungsform und
- Figur 4: eine weitere Ausführungsform einer zweiflutigen Abgasanlage mit einem gemeinsamen NOₓ-Speicherkatalysator.

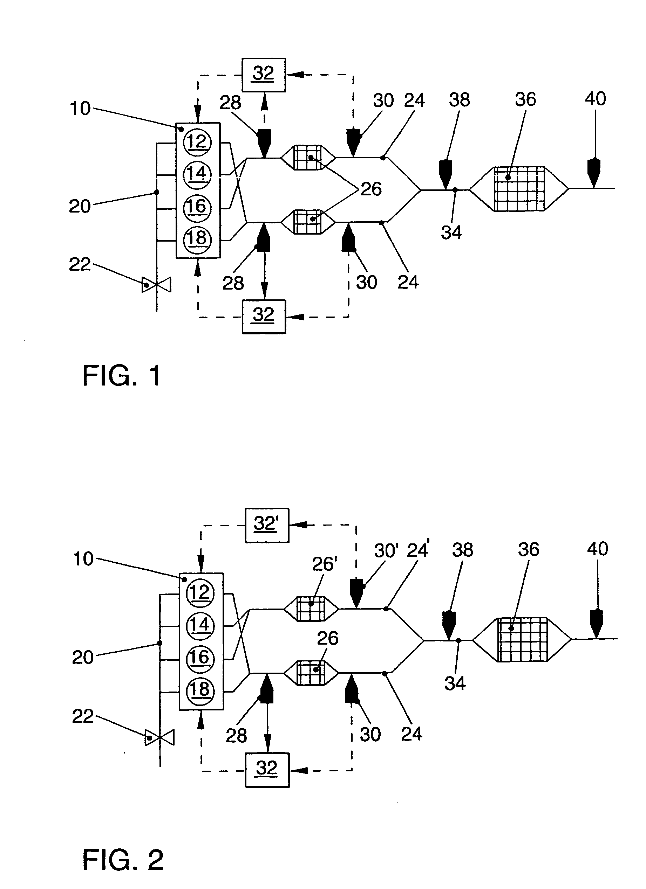

Figur 1 zeigt eine zweiflutige Abgasanlage mit einem gemeinsamen NOₓ-Speicherkatalysator und mit einer Sensorikausstattung, wie sie sich einem Fachmann durch schlichte Verdoppelung einer üblichen einflutigen Anlage in nahe liegender Weise aus dem Stand der Technik ergibt. Ein Mehrzylinderverbrennungsmotor 10, vorzugsweise ein direkteinspritzender Otto-Motor, umfasst vier in Reihe angeordnete Zylinder 12, 14, 16, 18. Eine Luftversorgung der Zylinder 12, 14, 16, 18 wird über eine gemeinsame Sauganlage 20 mit einem Stellmittel 22, beispielsweise einer Drosselklappe, zur Regelung eines Luftmassenstromes geleistet. Die vier Zylinder 12, 14, 16, 18 münden in zwei Abgasstränge 24 die jeweils einen kleinvolumigen Vorkatalysator 26, üblicherweise einen 3-Wege-Katalysator, beherbergen. An einer möglichst motomahen Position stromaufwärts der Vorkatalysatoren 26 ist als ein erster Gassensor eine Breitband-Lambdasonde 28 angeordnet. Diese dient der schnellen Vorregelung eines in die Zylinder 12, 14, 16, 18 einzuspeisenden Luft-Kraftstoff-Gemisches. Stromab eines jeden Vorkatalysators 26 ist jeweils ein zweiter Gassensor, insbesondere eine Sprungantwort-Lambdasonde 30, angeordnet. Die Sprungantwort-Lambdasonden 30 dienen einerseits einer Lambdafeinregelung der dem jeweiligen Abgasstrang 24 zugeordneten Zylinder 12, 14, 16, 18 und andererseits der Überwachung einer Konvertierungsaktivität der Katalysatoren 26. Die Signale der Breitband- sowie der Sprungantwort-Lambdasonden 28, 30 gehen in Regeleinrichtungen 32 ein, welche die Signale auswerten und das Luft-Kraftstoff-Verhältnis der Zylinder 12, 14, 16, 18 strang- oder zylinderselektiv auf eine Lambda-Sollvorgabe einregeln. Hierfür kann insbesondere vorgesehen sein, dass Steuerparameter einer hier nicht dargestellten Einspritzanlage des Mehrzylinderverbrennungsmotors 10, wie Einspritzmenge, Zündwinkel, Einspritzdauer, eine innere Abgasrückführrate und/oder Nacheinspritzparameter, geregelt werden. Darüber hinaus kann auch eine äußere Abgasrückführung vorgesehen sein, wobei eine äußere Abgasrückführrate beeinflussbar ist. In dem gezeigten Beispiel vereinigen sich die beiden Abgasstränge 24 stromabwärts der Sprungantwort-Lambdasonden 30 zu einem gemeinsamen Abgasstrang 34. In diesem befindet sich an einer motorfemen Position, insbesondere an einer Unterbodenposition des Kraftfahrzeuges, ein großvolumiger NOₓ-Speicherkatalysator 36, dessen Betrieb - insbesondere dessen Regenerationsintervalle - in bekannter Weise mittels eines stromauf des Katalysators angeordneten Temperatursensors 38 sowie eines nachgeschalteten NOₓ-Sensors 40 überwacht wird. In Abweichung zu dem gezeigten Beispiel können die Abgasstränge 24 auch bis zu einem Abgasauslass vollständig mehrflutig verlaufen. In diesem Fall sind in jedem Strang 24 jeweils ein entsprechend dimensionierter NOₓ-Speicherkatalysator 36 mit den zugehörigen Temperatur- und NOₓ-Sensoren 38, 40 anzuordnen. Es ist femer möglich, zusätzlich zu dem NOₓ-Speicherkatalysator 36 oder an seiner Stelle einen oder mehrere weitere Katalysatoren, beispielsweise einen 3-Wege-Hauptkatalysator, vorzusehen.

Figur 2 zeigt eine im Wesentlichen der Figur 1 entsprechende, aber gemäß einer ersten bevorzugten Ausführungsform der Erfindung ausgestaltete Abgasanlage. Merkmale der Mehrzylinderverbrennungsmotors 10 entsprechen Figur 1. Erfindungsgemäß wird hier in mindestens einem Abgasstrang 24' auf die Installation der Breitband-Lambdasonde 28 stromauf des Vorkatalysators 26' verzichtet. Insbesondere wird auch in einer Abgasanlage, die mehr als zwei Abgasstränge umfasst, die Verwendung genau einer Breitband-Lambdasonde 28 bevorzugt. In dieser Konstellation kann demnach zwischen einem vollbestückten Abgasstrang 24, der mit jeweils einer Breitband-Lambdasonde 28 und einer Sprungantwort-Lambdasonde 30 ausgestattet ist, und einem teilbestückten Abgasstrang 24' mit nur einer Sprungantwort-Lambdasonde 30' unterschieden werden. Die Regelung der Luft-Kraftstoff-Verhältnisse der dem vollbestückten Abgasstrang 24 zugeordneten Zylinder 12, 18 erfolgt durch die Regeleinrichtung 32, welche die Signale der Gassensoren 28, 30 verarbeitet. Auf der anderen Seite werden die dem teilbestückten Abgasstrang 24' zugeordneten Zylinder 14, 16 durch die Regeleinrichtung 32', welche die Signale der Sprungantwort-Lambdasonde 30' empfängt, geregelt. Selbstverständlich ist im Rahmen der Erfindung auch eine Lambdaregelung aller Zylinder 12, 14, 16, 18 durch eine einzige Regeleinrichtung denkbar, in der die Signale sämtlicher Sonden Eingang finden. Vorteilhafterweise können die Regeleinrichtungen 32, 32' auch in ein nicht dargestelltes Motorsteuergerät integriert sein. Ferner werden von der Erfindung auch Verbrennungsmotoren mit einer von der Darstellung abweichenden Anzahl und Anordnung von Zylindern sowie mehrteilige Sauganlagen, insbesondere bei Motoren mit mehreren Zylinderbänken (V-Motoren), erfasst.

Nachfolgend soll die Lambdaregelung des Mehrzylinderverbrennungsmotors 10 mit der in Figur 2 gezeigten Abgasanlage erläutert werden. Zunächst wird der Mehrzylinderverbrennungsmotor 10 mit einer einheitlichen Lambdaregelung des vollbestückten Abgasstranges 24 gefahren. Dafür wird aus einem von der Sauganlage 20 angesaugten Luftmassenstrom und dem gewünschten Lambdawert (Sollwert) eine grobe Vorgabe für die Kraftstoffeinspritzmenge ermittelt. Über die Breitband-Lambdasonde 28, die einen Ist-Lambdawert des Abgases ermittelt, wird der Lambdawert in bekannter Weise auf den Sollwert eingeregelt. Da die Abweichung des Ist-Lambdawertes vom Soll-Lambdawert durch die möglichst motomah angeordnete Breitband-Lambdasonde 28 unmittelbar gemessen wird, ist eine direkte Korrektur des Ist-Lambdawertes durch Änderung der Einspritzmenge proportional zur gemessenen Abweichung möglich. Infolgedessen erfolgt die Vorregelung sehr schnell. Eine Feinregelung des Lambdawertes der Zylinder 12, 14, 16, 18 erfolgt zunächst durch die nachgeschaltete Sprungantwort-Lambdasonde 30. Die Verwendung einer Sprungantwort-Lambdasonde an dieser Stelle hat den Vorteil, dass sie im Hauptapplikationsbereich, in welchem der genaueste Regelungsbedarf besteht, nämlich um λ = 1, eine höhere Auflösung als Breitband-Lambdasonden aufweist. In dieser Stufe der Lambdaregelung entspricht der gemessene Lambdawert (Ist-Lambda) im vollbestückten Abgasstrang 24 also sehr exakt der Lambdavorgabe (Soll-Lambda). Im teilbestückten Abgasstrang 24' wird hingegen mit großer Wahrscheinlichkeit eine gewisse Abweichung des Ist-Lambdawertes von dem Sollwert vorliegen. Diese Abweichung ist hauptsächlich durch eine ungleichmäßige Luftzufuhr zu den einzelnen Zylindern 12, 14, 16, 18 begründet. Im dargestellten Beispiel eines 4-Zylinder-Reihenmotors 10 etwa werden die beiden inneren Zylinder 14, 16 des teilbestückten Abgasstranges 24' gewöhnlich mit einer etwas höheren angesaugten Luftmasse versorgt als die beiden äußeren Zylinder 12, 18. Infolgedessen liegt nach alleiniger Regelung durch die Sonden 28, 30 des vollbestückten Stranges 24 ein geringfügig zu mageres Luft-Kraftstoff-Verhältnis im teilbestückten Abgasstrang 24' vor. Die endgültige Lambda-Feinregelung des teilbestückten Abgasstranges 24' erfolgt daher durch die Regeleinrichtung 32' in Abhängigkeit des Signals der Sprungantwort-Lambdasonde 30'.

Hierfür wird eine kontinuierliche Verschiebung des Luft-Kraftstoff-Gemisches der Zylinder 14, 16 in Richtung der vermuteten Abweichung durchgeführt, gemäß dem dargestellten Beispiel wird also kontinuierlich "angefettet", bis auch im Strang 24' der gewünschte Lambdawert vorliegt. In einem Kennfeld werden Wertepaare, die aus den Stellgrößen des Eingriffs der Regeleinrichtung 32 einerseits und den im vollbestückten Abgasstrang 24 gemessenen Lambdawerten andererseits bestehen, abgespeichert. Anhand dieses Kennfeldes kann eine Vorsteuerung des teilbestückten Abgasstranges 24' auch zylinderselektiv, das heißt mit einer vom vollbestückten Strang 24 abweichenden Lambdavorgabe, erfolgen. Vorteilhafterweise werden in dem Kennfeld zusätzliche Betriebspunkte des Fahrzeuges und/oder Randparameter gespeichert, die den Ist-Lambdawert beeinflussen.

Da im teilbestückten Abgasstrang 24' keine direkte Messung einer Abweichung des Ist-Lambdas vom Soll-Lambda möglich ist, erfolgt die Feinregelung in diesem Strang deutlich langsamer als im vollbestückten Abgasstrang 24. Eine Beschleunigung der Lambdaregelung im teilbestückten Abgasstrang 24' wird durch eine besonders vorteilhafte Ausgestaltung der Erfindung erreicht. Diese sieht vor, zu einem Zeitpunkt annähernd gleicher Lambdawerte in beiden Abgassträngen 24, 24' die Abweichung der Stellgrößen des Reglereingriffs in beiden Strängen 24, 24' zu bestimmen und in dem Kennfeld abzuspeichern. Zusätzlich sollte eine Betriebspunkt-Abhängigkeit der des Differenzwertes der Stellgrößen, insbesondere eine Drehzahl- und/oder eine Lastabhängigkeit, in dem Kennfeld gespeichert werden, so dass für jeden Betriebspunkt des Kraftfahrzeuges die theoretische Stellgröße sowie der Differenzwert bekannt ist. Bei einem erneuten Anfahren des gleichen Betriebspunktes kann somit die Differenz des Reglereingriffs direkt berücksichtigt werden. Im Prinzip wird dabei auf den für den vollbestückten Abgasstrang 24 vermerkten Reglereingriff der entsprechende Differenzwert aufaddiert. Im Resultat muss in beiden Strängen 24, 24' annähernd die gleiche Feinregelung durch die Sonden 30, 30' durchgeführt werden, so dass in beiden Abgassträngen 24, 24' die Lambdaregelung mit ungefähr der gleichen Geschwindigkeit durchgeführt werden kann. Dieses kommt einer Emissionsstabilität zugute.

Das Kennfeld kann noch weiter verfeinert werden. Beispielsweise können weitere Randbedingungen, welche die Lambdaregelung beeinflussen, berücksichtigt werden. So können etwa Dynamikeinflüsse, die eine Abhängigkeit einer Stellung eines Pedalwinkelgebers und/oder einer Geschwindigkeit, mit welcher sich Drehzahl, Luftmassen und/oder Einspritzsollvorgaben ändern, umfassen, Temperatureinflüsse und/oder ein Zustand des Katalysators 26, 26' hinsichtlich seiner Aktivität und/oder seiner Sauerstoffspeicherfähigkeit, mit in dem Kennfeld abgespeichert werden. Ferner kann eine fortlaufende Präzisierung des Kennfeldes durchgeführt werden, indem die Stellgrößen des Kennfeldes bei Vorliegen gleicher oder ähnlicher Betriebspunkte und Randbedingungen gemittelt werden. Bei der Mittelwertsbildung kann ferner eine Gewichtung vorgesehen sein.

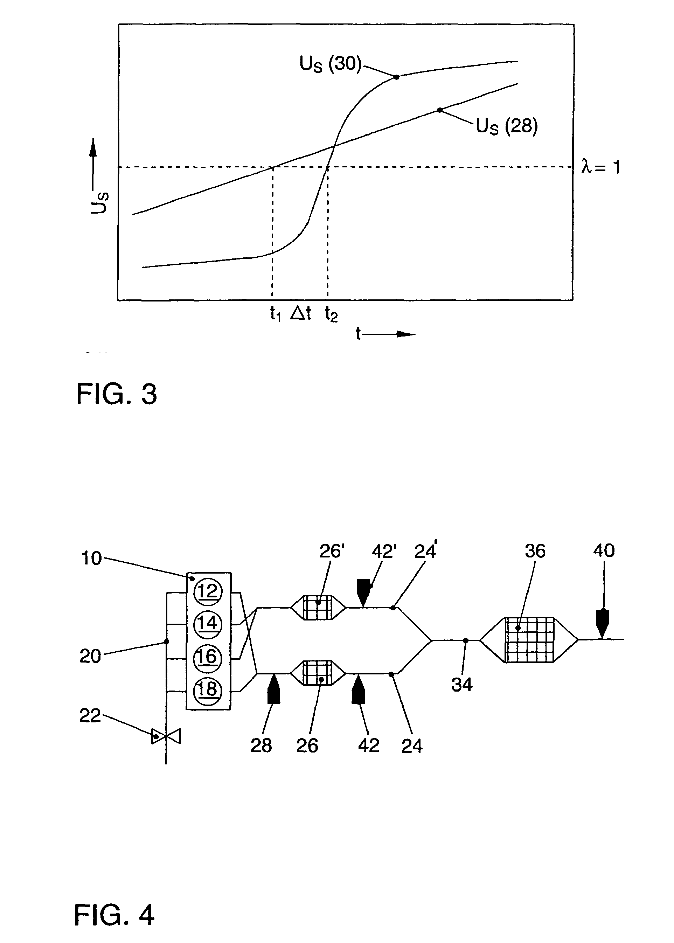

Die in Figur 2 gezeigte Sensorkonfiguration ermöglicht nicht nur eine exakte und schnelle Lambdaregelung in beiden Abgassträngen 24, 24', sondern auch eine kontinuierliche Überwachung des Zustandes der Vorkatalysatoren 26, 26'. Dieses wird durch die Figur 3 näher erläutert, in welcher vereinfachte zeitliche Verläufe einer Sondenspannung Uₛ der Breitband-Lambdasonde 28 (Uₛ(28)) sowie der Sprungantwort-Lambdasonde 30 (Uₛ(30)) während einer langsamen linearen Anfettung des Luft-Kraftstoff-Gemisches dargestellt ist. Die Sondenspannung Uₛ(28) der vorgeschalteten Breitband-Lambdasonde 28 spiegelt praktisch ohne zeitliche Verzögerung die lineare Anfettung des Luft-Kraftstoff-Gemisches wider. Zu einem Zeitpunkt t₁ entspricht das Signal Uₛ(28) der Breitband-Lambdasonde 28 einem Lambdawert von 1. Der Verlauf der Sondenspannung Uₛ(30) der nachgeschalteten Sprungantwort-Lambdasonde 30 zeigt einen typisch sigmoidalen Verlauf mit einer sprungartigen Spannungsänderung und einem Wendepunkt bei λ = 1. Die Sprungantwort-Lambdasonde 30 zeigt erst nach einer gewissen Verzögerung gegenüber der vorgeschalteten Breitband-Lambdasonde 28, nämlich zu einem Zeitpunkt t₂, einen Signalwert Uₛ(30) an, der λ = 1 entspricht. Die Zeitdifferenz Δt, die zwischen den übereinstimmenden Sensorsignalen vergeht, hängt einerseits von der zurückzulegenden, modellierbaren Laufzeit des Abgases zwischen den beiden Sonden 28, 30 ab. Auf der anderen Seite ist die Zeitverzögerung Δt proportional zu einer Sauerstoffspeicherfähigkeit des Katalysators 26. Hat dieser nämlich während der vorausgegangenen Magerphase, in welcher Sauerstoff in einem stöchiometrischen Überschuss im Abgas vorliegt, Sauerstoff eingelagert, so wird dieser sorbierte Sauerstoff bei dem Mager-Fett-Übergang wieder freigesetzt, so dass für eine gewisse Dauer nach dem Übergang stromab des Katalysators 26 noch eine sauerstoffhaltige, das heißt magere Atmosphäre, detektiert wird. Da die Sauerstoffspeicherfähigkeit des Katalysators 26 wiederum mit seiner Konvertierungsaktivität korreliert, kann durch Registrierung und Beobachtung von At die Katalysatoraktivität mit hoher Empfindlichkeit überwacht werden. Alternativ kann statt des Signalverlaufs der Breitband-Lambdasonde 28 auch der Zeitpunkt eines Eingriffs in die Luft-Kraftstoff-Regelung der betreffenden Zylinder für die Berechnung von Δt verwendet werden. Die für den Katalysator 26 ermittelte Katalysatoraktivität kann auf den Katalysator 26' des teilbestückten Abgasstranges 24' übertragen werden.

Die Figur 4 zeigt eine alternative Ausgestaltung einer erfindungsgemäßen mehrsträngigen Abgasanlage mit einem gemeinsamen NOₓ-Speicherkatalysator. Wie bereits in dem in Figur 2 dargestellten Beispiel, umfasst die Abgasanlage einen vollbestückten Abgasstrang 24 und einen teilbestückten Abgasstrang 24'. Auf die Darstellung der/die Regeleinrichtung/en 32, 32' wurde hier verzichtet. Gemäß dieser Ausführung werden beide den Katalysatoren 26, 26' nachgeschaltete Sprungantwort-Lambdasonden durch die Temperatursensoren 42, 42' ersetzt. In dieser Ausführung erfolgt die Lambdaregelung in beiden Abgassträngen 24, 24' ausschließlich in Abhängigkeit der vorgeschalteten Lambdasonde 28. Eine Zustandsüberwachung der Katalysatoren 26, 26' erfolgt anhand der durch die Temperaturmessstellen 42, 42' erfassten Abgastemperaturen hinter den Katalysatoren 26, 26'. Die von den Sensoren 42, 42' ermittelten Abgastemperaturen werden mit den stromauf der Katalysatoren 26, 26' vorliegenden Abgastemperaturen verglichen. Letztere können entweder durch weitere, entsprechend angeordnete Temperaturmessstellen ermittelt werden oder günstiger anhand bekannter Betriebsparameter des Verbrennungsmotors 10 hinreichend genau modelliert werden. Bei dieser Konstellation wird von der Tatsache Gebrauch gemacht, dass eine Konvertierungsaktivität eines Katalysators immer mit einer Temperaturerhöhung des Abgases einhergeht. Demzufolge kann eine Schädigung der Katalysatoren 26, 26' festgestellt werden, wenn keine oder lediglich zu geringe Temperaturanstiege hinter den Katalysatoren 26, 26' gemessen werden. Gegenüber der in Figur 2 gezeigten Ausführung, bei welcher die Katalysatorüberwachung mittels nachgeschalteter Lambdasonden 30, 30' erfolgt, können mittels der Temperatursensoren 42, 42' jedoch nur verhältnismäßig starke Schädigungen des Katalysators 26, 26' detektiert werden. Die Anordnung hat jedoch den Vorteil, dass auf einen dem NOₓ-Speicherkatalysator 36 vorgeschalteten Temperatursensor 38 (vgl. Fig. 2) verzichtet werden kann.

### BEZUGSZEICHENLISTE

- 10: Mehrzylinderverbrennungsmotor
- 12, 14, 16, 18: Zylinder
- 20: Sauganlage
- 22: Stellmittel
- 24: Abgasstrang (vollbestückt)
- 24': Abgasstrang (teilbestückt)
- 26, 26': erster KatalysatorNorkatalysator
- 28, 28': erster Gassensor/Breitband-Lambdasonde
- 30, 30': zweiter Gassensor/Sprungantwort-Lambdasonde
- 32, 32': Regeleinrichtung
- 34: gemeinsamer Abgasstrang
- 36: zweiter Katalysator/NOₓ-Speicherkatalysator
- 38: Temperatursensor
- 40: NOₓ-Sensor
- 42, 42': Temperatursensor

- Uₛ: Sondenspannung
- t: Zeit
- Δt: Zeitdifferenz

## Patentansprüche

1. Mehrflutige Abgasanlage eines Mehrzylinderverbrennungsmotors (10) für Kraftfahrzeuge mit
(a) mindestens zwei Abgassträngen (24, 24'), in die jeweils mindestens ein Zylinder (12, 14, 16, 18) mündet,
(b) mindestens einem ersten, in jedem Abgasstrang (24, 24') angeordneten Katalysator (26, 26'),
(c) mindestens einem ersten, stromauf des Katalysators (26) angeordneten Gassensor (28), wobei eine Anzahl der mit dem ersten Gassensor (28) bestückten Abgasstränge (24) kleiner als eine Gesamtzahl der Abgasstränge (24, 24') ist, so dass die Abgasanlage mindestens einen vollbestückten Abgasstrang (24) umfasst, der den ersten Gassensor (28) aufweist, und mindestens einen teilbestückten, den ersten Gassensor nicht aufweisenden Abgasstrang (24'), und
(d) mindestens einer Regeleinrichtung (32, 32') zur Verarbeitung des durch den mindestens einen ersten Gassensor (28) bereitgestellten Signals und Regelung eines in die Zylinder (12, 14, 16, 18) einzuspeisenden Luft-Kraftstoff-Verhältnisses mit den Schritten:
- Erfassung eines von einer Konzentration mindestens einer Abgaskomponente abhängigen Signals des mindestens einen ersten, in dem mindestens einen vollbestückten Abgasstrang (24) angeordneten Gassensors (28) und
- Regelung eines Luft-Kraftstoff-Verhältnisses des mindestens einen, dem mindestens einen vollbestückten Abgasstrang (24) zugeordneten Zylinders (12, 18) in Abhängigkeit des Signals des ersten Gassensors (28),
**dadurch gekennzeichnet, dass**
die mindestens eine Regeleinrichtung (32, 32') weiterhin die Schritte ausführt:
- Speicherung eines Kennfeldes, welches Stellgrößen der Luft-Kraftstoff-Regelung des mindestens einen, dem vollbestückten Abgasstrang (24) zugeordneten Zylinders (12, 18) einem gemessenen Ist-Signalwert des ersten Gassensors (28) zuordnet, und
- Vorsteuerung eines Luft-Kraftstoff-Verhältnisses des mindestens einen, dem teilbestückten Abgasstrang (24') zugeordneten Zylinders (14, 16) mittels des Kennfeldes.

2. Abgasanlage nach Anspruch 1, **dadurch gekennzeichnet, dass** stromab des ersten Katalysators (26, 26') oder eines weiteren Katalysators, in jedem Abgasstrang (24, 24') ein zweiter Gassensor (30, 30') und/oder ein Temperatursensor (42, 42') angeordnet ist.

3. Abgasanlage nach Anspruch 1 oder 2, **dadurch gekennzeichnet, dass** der mindestens eine erste Gassensor (28) eine Lambdasonde, insbesondere eine Breitband-Lambdasonde, ist.

4. Abgasanlage nach Anspruch 2 oder 3, **dadurch gekennzeichnet, dass** der zweite Gassensor (30, 30') eine Lambdasonde, insbesondere eine Sprungantwort-Lambdasonde, ist.

5. Abgasanlage nach einem der vorhergehenden Ansprüche, **dadurch gekennzeichnet, dass** der erste Gassensor (28) an einer möglichst motomahen Position des Abgasstranges (24) angeordnet ist.

6. Abgasanlage nach einem der vorhergehenden Ansprüche, **dadurch gekennzeichnet, dass** genau ein erster Gassensor (28) vorgesehen ist.

7. Abgasanlage nach einem der vorhergehenden Ansprüche, **dadurch gekennzeichnet, dass** der erste Katalysator (26, 26') ein Vorkatalysator, insbesondere ein 3-Wege-Vorkatalysator, ist.

8. Abgasanlage nach einem der vorhergehenden Ansprüche, **dadurch gekennzeichnet, dass** stromab des Katalysators (26, 26'), insbesondere an einer Unterbodenposition, mindestens ein zweiter Katalysator (36), insbesondere ein 3-Wege-Katalysator und/oder ein NOₓ-Speicherkatalysator, angeordnet ist.

9. Abgasanlage nach einem der vorhergehenden Ansprüche, **dadurch gekennzeichnet, dass** die Abgasstränge (24, 24') bis zu einem Abgasauslass vollständig mehrflutig verlaufen.

10. Abgasanlage nach einem der Ansprüche 1 bis 8, **dadurch gekennzeichnet, dass** sich mindestens zwei Abgasstränge (24, 24') an einer dem Abgasauslass vorgelagerten Position, insbesondere unmittelbar vor einem gemeinsamen zweiten Katalysator (36), zu einem oder mehreren Abgassträngen (34) vereinigen.

11. Abgasanlage nach einem der vorhergehenden Ansprüche, **dadurch gekennzeichnet, dass** der Mehrzylinderverbrennungsmotor (10) ein Ottomotor, insbesondere ein direkteinspritzender Ottomotor, ist.

12. Abgasanlage nach Anspruch 11, **dadurch gekennzeichnet, dass** das in die Zylinder (12, 14, 16, 18) einzuspeisende Luft-Kraftstoff-Verhältnis strangselektiv, insbesondere zylinderselektiv, steuerbar ist.

13. Abgasanlage nach Anspruch 12, **dadurch gekennzeichnet, dass** Steuerparameter der Zylinder (12, 14, 16, 18), wie Einspritzmenge, Zündwinkel, Einspritzdauer, innere Abgasrückführrate und/oder Nacheinspritzparameter, strang- oder zylinderselektiv beeinflussbar sind.

14. Abgasanlage nach Anspruch 12 oder 13, **dadurch gekennzeichnet, dass** eine Abgasrückführung vorgesehen ist, wobei eine äußere Abgasrückführrate strang- oder zylinderselektiv beeinflussbar ist.

15. Verfahren zur Regelung eines Luft-Kraftstoff-Verhältnisses eines Mehrzylinderverbrennungsmotors (10) für Kraftfahrzeuge mit einer mehrflutigen Abgasanlage mit mindestens zwei Abgassträngen (24, 24') nach einem der Ansprüche 1 bis 14 mit den Schritten:
- Erfassung eines von einer Konzentration mindestens einer Abgaskomponente abhängigen Signals des mindestens einen ersten, stromauf des ersten Katalysators (26) in dem mindestens einen vollbestückten Abgasstrang (24) angeordneten Gassensors (28) und
- Regelung eines Luft-Kraftstoff-Verhältnisses des mindestens einen dem vollbestückten Abgasstrang (24) zugeordneten Zylinders (12, 18) in Abhängigkeit des Signals des ersten Gassensors (28),
**gekennzeichnet durch**
die Schritte:
- Speicherung eines Kennfeldes, welches Stellgrößen der Luft-Kraftstoff-Regelung des mindestens einen, dem vollbestückten Abgasstrang (24) zugeordneten Zylinders (12, 18) einem gemessenen Ist-Signalwert des ersten Gassensors (28) zuordnet, und
- Vorsteuerung eines Luft-Kraftstoff-Verhältnisses des mindestens einen, dem teilbestückten Abgasstrang (24') zugeordneten Zylinders (14, 16) mittels des Kennfeldes.

16. Verfahren nach Anspruch 15, **dadurch gekennzeichnet, dass** der mindestens eine erste Gassensor (28) eine Lambdasonde, insbesondere eine Breitband-Lambdasonde, ist.

17. Verfahren nach Anspruch 15 oder 16, **dadurch gekennzeichnet, dass** eine Feinregelung des Luft-Kraftstoff-Verhältnisses des mindestens einen, einem voll- oder teilbestückten Abgasstrang (24, 24') zugeordneten Zylinders (12, 14, 16, 18) in Abhängigkeit eines mittels eines stromab des ersten Katalysators (26, 26') oder eines weiteren Katalysators angeordneten zweiten Gassensors (30, 30') erfassten Signals, das von der Konzentration der mindestens einen Abgaskomponente abhängt, erfolgt.

18. Verfahren nach Anspruch 17, **dadurch gekennzeichnet, dass** der zweite Gassensor (30, 30') eine Lambdasonde, insbesondere eine Sprungantwort-Lambdasonde, ist.

19. Verfahren nach einem der Ansprüche 15 bis 18, **dadurch gekennzeichnet, dass** ein Differenzwert der Stellgrößen der Luft-Kraftstoff-Regelung zwischen dem mindestens einen Zylinder (12, 18) eines vollbestückten Abgasstranges (24) und dem mindestens einen Zylinder (14, 16) eines teilbestückten Abgasstranges (24') bei im Wesentlichen gleichen Ist-Signalwerten der zweiten Gassensoren (30, 30') in den Abgassträngen (24, 24') in dem Kennfeld gespeichert und bei der Vorsteuerung des mindestens einen dem teilbestückten Abgasstrang (24') zugeordneten Zylinder (14, 16) einkalkuliert wird.

20. Verfahren nach Anspruch 19, **dadurch gekennzeichnet, dass** eine Betriebspunkt-Abhängigkeit der Stellgrößen und/oder des Differenzwertes der Stellgrößen des Kraftfahrzeugs, insbesondere eine Drehzahl- und/oder eine Last-Abhängigkeit, in dem Kennfeld gespeichert wird.

21. Verfahren nach Anspruch 19 oder 20, **dadurch gekennzeichnet, dass** weitere, die Stellgrößen und/oder den Differenzwert der Stellgrößen beeinflussende Randbedingungen, wie eine Stellung eines Pedalwertgebers, eine Änderungsgeschwindigkeit einer Sollvorgabe einer Drehzahl, eines Luftmassenstroms und einer Einspritzmenge, eine Temperatur, eine Katalysatoraktivität, eine Sauerstoffspeicherfähigkeit des Katalysators (26, 26'), in dem Kennfeld gespeichert werden.

22. Verfahren nach einem der Ansprüche 19 bis 21, **dadurch gekennzeichnet, dass** Kennwerte des Kennfeldes fortlaufend durch gewichtete oder ungewichtete Mittelung der Kennwerte bei mehrmaligem Auftreten gleicher oder ähnlicher Betriebspunkte gefiltert werden.

23. Verfahren nach einem der Ansprüche 15 bis 22, **dadurch gekennzeichnet, dass** in Abhängigkeit einer Zeitverzögerung (Δt), die zwischen einer Änderung des dem mindestens einen Zylinder (12, 14, 16, 18) zugeführten Luft-Kraftstoff-Verhältnisses und einer Antwort des stromab des Katalysators (26, 26') angeordneten zweiten Gassensors (30, 30') erfolgt, eine Zustandsüberwachung des Katalysators (26, 26') durchgeführt wird.

24. Verfahren nach einem der Ansprüche 15 bis 22, **dadurch gekennzeichnet, dass** in Abhängigkeit einer stromab des Katalysators (26, 26') gemessenen Abgastemperatur eine Zustandsüberwachung des Katalysators (26, 26') durchgeführt wird.

25. Verfahren nach einem der Ansprüche 15 bis 24, **dadurch gekennzeichnet, dass** eine Kalibrierung der Breitband-Lambdasonde (28) mittels der stromab von dieser angeordneten Sprungantwort-Lambdasonde (26, 26') durchgeführt wird.

## Claims

1. Multiple-flow exhaust-gas system of a multiple-cylinder internal combustion engine (10) for motor vehicles, having
(a) at least two exhaust-gas sections (24, 24'), into which in each case at least one cylinder (12, 14, 16, 18) opens,
(b) at least one first catalytic converter (26, 26') which is arranged in each exhaust-gas section (24, 24'),
(c) at least one first gas sensor (28) which is arranged upstream of the catalytic converter (26), a number of exhaust-gas sections (24) which are fitted with the first gas sensor (28) being smaller than an overall number of exhaust-gas sections (24, 24'), with the result that the exhaust-gas system comprises at least one fully fitted exhaust-gas section (24) which has the first gas sensor (28) and at least one partially fitted exhaust-gas section (24') which does not have the first gas sensor, and
(d) at least one regulating device (32, 32') for processing the signal which is provided by the at least one first gas sensor (28) and for regulating an air/fuel ratio which is to be fed into the cylinders (12, 14, 16, 18), having the following steps:
- detecting a signal, which is dependent on a concentration of at least one exhaust-gas component, of the at least one first gas sensor (28) which is arranged in the at least one fully fitted exhaust-gas section (24), and
- regulating an air/fuel ratio of the at least one cylinder (12, 18) which is assigned to the at least one fully fitted exhaust-gas section (24), as a function of the signal of the first gas sensor (28),
**characterized in that**,
furthermore, the at least one regulating device (32, 32') carries out the following steps:
- storing a characteristic diagram which assigns to a measured actual signal value of the first gas sensor (28) actuating variables for the air/fuel regulation of the at least one cylinder (12, 18) which is assigned to the fully fitted exhaust-gas section (24), and
- pilot control of an air/fuel ratio of the at least one cylinder (14, 16) which is assigned to the partially fitted exhaust-gas section (24'), by means of the characteristic diagram.

2. Exhaust-gas system according to Claim 1, **characterized in that**, downstream of the first catalytic converter (26, 26') or of a further catalytic converter, a second gas sensor (30, 30') and/or a temperature sensor (42, 42') is arranged in each exhaust-gas section (24, 24').

3. Exhaust-gas system according to Claim 1 or 2, **characterized in that** the at least one first gas sensor (28) is a lambda probe, in particular a wide-band lambda probe.

4. Exhaust-gas system according to Claim 2 or 3, **characterized in that** the second gas sensor (30, 30') is a lambda probe, in particular a step-response lambda probe.

5. Exhaust-gas system according to one of the preceding claims, **characterized in that** the first gas sensor (28) is arranged at a position of the exhaust-gas section (24) which is as close to the engine as possible.

6. Exhaust-gas system according to one of the preceding claims, **characterized in that** exactly one first gas sensor (28) is provided.

7. Exhaust-gas system according to one of the preceding claims, **characterized in that** the first catalytic converter (26, 26') is a primary catalytic converter, in particular a 3-way primary catalytic converter.

8. Exhaust-gas system according to one of the preceding claims, **characterized in that** at least one second catalytic converter (36), in particular a 3-way catalytic converter and/or a NOₓ storage catalytic converter, is arranged downstream of the catalytic converter (26, 26'), in particular at an underbody position.

9. Exhaust-gas system according to one of the preceding claims, **characterized in that** the exhaust-gas sections (24, 24') extend completely in a multiple-flow manner as far as an exhaust-gas outlet.

10. Exhaust-gas system according to one of Claims 1 to 8, **characterized in that** at least two exhaust-gas sections (24, 24') join to form one or more exhaust-gas sections (34) at a position which is situated before the exhaust-gas outlet, in particular directly before a common second catalytic converter (36).

11. Exhaust-gas system according to one of the preceding claims, **characterized in that** the multiple-cylinder internal combustion engine (10) is a spark-ignition engine, in particular a direct injection spark-ignition engine.

12. Exhaust-gas system according to Claim 11, **characterized in that** the air/fuel ratio which is to be fed into the cylinders (12, 14, 16, 18) can be controlled in a section-selective manner, in particular in a cylinder-selective manner.

13. Exhaust-gas system according to Claim 12, **characterized in that** control parameters of the cylinders (12, 14, 16, 18) can be influenced in a section-selective or cylinder-selective manner, such as injection amount, ignition angle, injection duration, inner exhaust-gas recirculation rate and/or post-injection parameters.

14. Exhaust-gas system according to Claim 12 or 13, **characterized in that** an exhaust-gas recirculation means is provided, it being possible for an outer exhaust-gas recirculation rate to be influenced in a section-selective or cylinder-selective manner.

15. Method for regulating an air/fuel ratio of a multiple-cylinder internal combustion engine (10) for motor vehicles, having a multiple-flow exhaust-gas system with at least two exhaust-gas sections (24, 24') according to one of Claims 1 to 14, having the following steps:
- detecting a signal, which is dependent on a concentration of at least one exhaust-gas component, of the at least one first gas sensor (28) which is arranged in the at least one fully fitted exhaust-gas section (24) upstream of the first catalytic converter (26), and
- regulating an air/fuel ratio of the at least one cylinder (12, 18) which is assigned to the at least one fully fitted exhaust-gas section (24), as a function of the signal of the first gas sensor (28),
**characterized by**
the following steps:
- storing a characteristic diagram which assigns to a measured actual signal value of the first gas sensor (28) actuating variables for the air/fuel regulation of the at least one cylinder (12, 18) which is assigned to the fully fitted exhaust-gas section (24), and
- pilot control of an air/fuel ratio of the at least one cylinder (14, 16) which is assigned to the partially fitted exhaust-gas section (24'), by means of the characteristic diagram.

16. Method according to Claim 15, **characterized in that** the at least one first gas sensor (28) is a lambda probe, in particular a wide-band lambda probe.

17. Method according to Claim 15 or 16, **characterized in that** precision regulation of the air/fuel ratio of the at least one cylinder (12, 14, 16, 18) which is assigned to a fully or partially fitted exhaust-gas section (24, 24') takes place as a function of a signal which depends on the concentration of the at least one exhaust-gas component and is sensed by means of a second gas sensor (30, 30') which is arranged downstream of the first catalytic converter (26, 26') or a further catalytic converter.

18. Method according to Claim 17, **characterized in that** the second gas sensor (30, 30') is a lambda probe, in particular a step-response lambda probe.

19. Method according to one of Claims 15 to 18, **characterized in that** a differential value of the actuating variables of the air/fuel regulation between the at least one cylinder (12, 18) of a fully fitted exhaust-gas section (24) and the at least one cylinder (14, 16) of a partially fitted exhaust-gas section (24'), with substantially identical actual signal values of the second gas sensors (30, 30') in the exhaust-gas sections (24, 24'), is stored in the characteristic diagram and is included in calculations for the pilot control of the at least one cylinder (14, 16) which is assigned to the partially fitted exhaust-gas section (24').

20. Method according to Claim 19, **characterized in that** an operating-point dependence of the actuating variables and/or of the differential value of the actuating variables of the motor vehicle, in particular a rotational-speed dependence and/or a load dependence, is stored in the characteristic diagram.

21. Method according to Claim 19 or 20, **characterized in that** further boundary conditions which influence the actuating variables and/or the differential value of the actuating variables are stored in the characteristic diagram, such as a position of a pedal transducer, a change speed of a desired preset of a rotational speed, of an air mass flow and of an injection amount, a temperature, a catalyst activity, an ability of the catalytic converter (26, 26') to store oxygen.

22. Method according to one of Claims 19 to 21, **characterized in that** characteristic values of the characteristic diagram are filtered continuously by weighted or unweighted averaging of the characteristic values if identical or similar operating points occur repeatedly.

23. Method according to one of Claims 15 to 22, **characterized in that** a state monitoring operation of the catalytic converter (26, 26') is carried out as a function of a time delay (Δt) which elapses between a change in the air/fuel ratio which is fed to the at least one cylinder (12, 14, 16, 18) and a response of the second gas sensor (30, 30') which is arranged downstream of the catalytic converter (26, 26').

24. Method according to one of Claims 15 to 22, **characterized in that** a state monitoring operation of the catalytic converter (26, 26') is carried out as a function of an exhaust-gas temperature which is measured downstream of the catalytic converter (26, 26').

25. Method according to one of Claims 15 to 24, **characterized in that** a calibration of the wide-band lambda probe (28) is carried out by means of the step-response lambda probe (26, 26') which is arranged downstream of the said wide-band lambda probe (28).

## Revendications

1. Système d'échappement multiple d'un moteur à combustion interne à multiples cylindres (10) pour des véhicules automobiles, comprenant
(a) au moins deux voies d'échappement (24, 24') dans lesquelles débouche à chaque fois au moins un cylindre (12, 14, 16, 18),
(b) au moins un premier catalyseur (26, 26') disposé dans chaque voie d'échappement (24, 24'),
(c) au moins un premier détecteur de gaz (28) disposé en amont du catalyseur (26), le nombre des voies d'échappement (24) munies du premier détecteur de gaz (28) étant inférieur au nombre total des voies d'échappement (24, 24'), de sorte que le système d'échappement comprenne au moins une voie d'échappement (24) complètement équipée qui présente le premier détecteur de gaz (28) et au moins une voie d'échappement (24') partiellement équipée ne présentant pas le premier détecteur de gaz, et
(d) au moins un dispositif de réglage (32, 32') pour le traitement du signal fourni par ledit au moins un premier détecteur de gaz (28) et pour le réglage d'un rapport air-carburant à injecter dans les cylindres (12, 14, 16, 18), avec les étapes suivantes :
- détection d'un signal dudit au moins un premier détecteur de gaz (28) disposé dans ladite au moins une voie d'échappement (24) complètement équipée, dépendant d'une concentration d'au moins un composant des gaz d'échappement et
- réglage d'un rapport air-carburant dudit au moins un cylindre (12, 18) associé audit au moins une voie d'échappement (24) complètement équipée, en fonction du signal du premier détecteur de gaz (28),
**caractérisé en ce que**
ledit au moins un dispositif de réglage (32, 32') effectue en outre les étapes suivantes :
- mémorisation d'un champ caractéristique qui associe des valeurs de réglage du réglage air-carburant dudit au moins un cylindre (12, 18) associé à la voie d'échappement (24) complètement équipée à une valeur réelle mesurée de signal du premier détecteur de gaz (28), et
- précommande d'un rapport air-carburant dudit au moins un cylindre (14, 16) associé à la voie d'échappement (24') partiellement équipée, au moyen du champ caractéristique.

2. Système d'échappement selon la revendication 1, **caractérisé en ce qu'**en aval du premier catalyseur (26, 26') ou d'un autre catalyseur, dans chaque voie de gaz d'échappement (24, 24') est disposé un deuxième détecteur de gaz (30, 30') et/ou un détecteur de température (42, 42').

3. Système d'échappement selon la revendication 1 ou 2, **caractérisé en ce que** ledit au moins un premier détecteur de gaz (28) est une sonde lambda, notamment une sonde lambda à large bande.

4. Système d'échappement selon la revendication 2 ou 3, **caractérisé en ce que** le deuxième détecteur de gaz (30, 30') est une sonde lambda, notamment une sonde lambda à réponse indicielle.

5. Système d'échappement selon l'une quelconque des revendications précédentes, **caractérisé en ce que** le premier détecteur de gaz (28) est disposé au dans une position aussi proche que possible de la voie d'échappement (24).

6. Système d'échappement selon l'une quelconque des revendications précédentes, **caractérisé en ce que** l'on prévoit exactement un premier détecteur de gaz (28).

7. Système d'échappement selon l'une quelconque des revendications précédentes, **caractérisé en ce que** le premier catalyseur (26, 26') est un précatalyseur, notamment un précatalyseur à 3 voies.

8. Système d'échappement selon l'une quelconque des revendications précédentes, **caractérisé en ce qu'**en aval du catalyseur (26, 26'), notamment dans une position sous châssis, on dispose au moins un deuxième catalyseur (36), notamment un catalyseur à 3 voies et/ou un catalyseur à accumulation de NOₓ.

9. Système d'échappement selon l'une quelconque des revendications précédentes, **caractérisé en ce que** les voies d'échappement (24, 24') s'étendent de complètement manière multiple jusqu'à une sortie d'échappement.

10. Système d'échappement selon l'une quelconque des revendications 1 à 8, **caractérisé en ce qu'**au moins deux voies d'échappement (24, 24') se réunissent en une position située avant la sortie d'échappement, notamment directement avant un deuxième catalyseur commun (36), pour former une ou plusieurs voies d'échappement (34).

11. Système d'échappement selon l'une quelconque des revendications précédentes, **caractérisé en ce que** le moteur à combustion interne à multiples cylindres (10) est un moteur à allumage par étincelle, notamment un moteur Otto à injection directe.

12. Système d'échappement selon la revendication 11, **caractérisé en ce que** le rapport air-carburant à injecter dans les cylindres (12, 14, 16, 18) peut être commandé en fonction de la voie, notamment en fonction du cylindre.

13. Système d'échappement selon la revendication 12, **caractérisé en ce que** des paramètres de commande des cylindres (12, 14, 16, 18), tels que la quantité à injecter, l'angle d'allumage, la durée de l'injection, le taux interne de recirculation des gaz d'échappement et/ou des paramètres de post-injection, peuvent être influencés en fonction de la voie ou en fonction du cylindre.

14. Système d'échappement selon la revendication 12 ou 13, **caractérisé en ce qu'**il est prévu une recirculation des gaz d'échappement, un taux de recirculation des gaz d'échappement extérieur pouvant être influencé en fonction de la voie ou du cylindre.

15. Procédé de réglage d'un rapport air-carburant d'un moteur à combustion interne à multiples cylindres (10) pour véhicules automobiles comprenant un système d'échappement multiple comprenant au moins deux voies d'échappement (24, 24') selon l'une quelconque des revendications 1 à 14, comprenant les étapes suivantes
- détection d'un signal dudit au moins un premier détecteur de gaz (28) disposé en amont du premier catalyseur (26) dans ladite au moins une voie d'échappement (24) complètement équipée, dépendant d'une concentration d'au moins un composant des gaz d'échappement et
- réglage d'un rapport air-carburant dudit au moins un cylindre (12, 18) associé à ladite au moins une voie d'échappement (24) complètement équipée, en fonction du signal du premier détecteur de gaz (28),
**caractérisé par**
les étapes suivantes :
- mémorisation d'un champ caractéristique qui associe des valeurs de réglage du réglage air-carburant dudit au moins un cylindre (12, 18) associé à la voie d'échappement (24) complètement équipée à une valeur réelle mesurée de signal du premier détecteur de gaz (28), et
- précommande d'un rapport air-carburant dudit au moins un cylindre (14, 16) associé à la voie d'échappement (24') partiellement équipée, au moyen du champ caractéristique.

16. Procédé selon la revendication 15, **caractérisé en ce que** ledit au moins un premier détecteur de gaz (28) est une sonde lambda, notamment une sonde lambda à large bande.

17. Procédé selon la revendication 15 ou 16, **caractérisé en ce qu'**il se produit un réglage fin du rapport air-carburant dudit au moins un cylindre (12, 14, 16, 18) associé à une voie d'échappement complètement ou partiellement équipée (24, 24') en fonction d'un signal détecté au moyen d'un deuxième détecteur de gaz (30, 30') disposé en aval du premier catalyseur (26, 26') ou d'un autre catalyseur, qui dépend de la concentration dudit au moins un composant des gaz d'échappement.

18. Procédé selon la revendication 17, **caractérisé en ce que** le deuxième détecteur de gaz (30, 30') est une sonde lambda, notamment une sonde lambda à réponse indicielle.

19. Procédé selon l'une quelconque des revendications 15 à 18, **caractérisé en ce qu'**une valeur de différence des valeurs de réglage du réglage air-carburant entre ledit au moins un cylindre (12, 18) d'une voie d'échappement complètement équipée (24) et ledit au moins un cylindre (14, 16) d'une voie d'échappement partiellement équipée (24') pour des valeurs de signal réelles essentiellement identiques des deuxièmes détecteurs de gaz d'échappement (30, 30') dans les voies d'échappement (24, 24') est mémorisée dans le champ caractéristique et est utilisée lors de la précommande dudit au moins un cylindre (14, 16) associé à la voie d'échappement partiellement équipée (24').

20. Procédé selon la revendication 19, **caractérisé en ce qu'**une dépendance du point de fonctionnement des valeurs de réglage et/ou de la valeur de différence des valeurs de réglage du véhicule automobile, notamment une dépendance du régime et/ou de la charge, est mémorisée dans le champ caractéristique.

21. Procédé selon la revendication 19 ou 20, **caractérisé en ce que** d'autres conditions marginales influençant les valeurs de réglage et/ou la valeur de différence des valeurs de réglage, comme un réglage d'un générateur de valeur de pédale, une vitesse de variation d'une valeur prédéfinie de consigne d'un régime, d'un débit massique d'air et d'une quantité à injecter, une température, une activité du catalyseur, une capacité de stockage d'oxygène du catalyseur (26, 26'), sont mémorisées dans le champ caractéristique.

22. Procédé selon l'une quelconque des revendications 19 à 21, **caractérisé en ce que** des valeurs caractéristiques du champ caractéristique sont filtrées en continu par un moyennage pondéré ou non pondéré des valeurs caractéristiques en cas d'occurrences multiples de points de fonctionnement identiques ou similaires.

23. Procédé selon l'une quelconque des revendications 15 à 22, **caractérisé en ce qu'**une surveillance de l'état du catalyseur (26, 26') est réalisée en fonction d'un retard (Δt) qui se produit entre une variation du rapport air-carburant acheminé audit au moins un cylindre (12, 14, 16, 18) et une réponse du deuxième détecteur de gaz (30, 30') disposé en aval du catalyseur (26, 26').

24. Procédé selon l'une quelconque des revendications 15 à 22, **caractérisé en ce qu'**une surveillance de l'état du catalyseur (26, 26') est réalisée en fonction d'une température de gaz d'échappement mesurée en aval du catalyseur (26, 26').

25. Procédé selon l'une quelconque des revendications 15 à 24, **caractérisé en ce qu'**un calibrage de la sonde lambda à large bande (28) est effectué au moyen de la sonde lambda à réponse indicielle (26, 26') disposée en aval de celle-ci.
